# EUROPÄISCHE PATENTSCHRIFT

(11) **EP 3 792 116 B1**
(45) Veröffentlichungstag und Bekanntmachung des Hinweises auf die Patenterteilung: **08.06.2022**
(21) Anmeldenummer: 20182762.3
(22) Anmeldetag: 29.06.2020
(51) Int. Cl.: B60R 16/03, H02J 7/14, H02J 1/08

(54) **BORDNETZSYSTEM**
VEHICLE ELECTRICAL SYSTEM
SYSTÈME DE RÉSEAU DE BORD

(30) Priorität: 30.07.2019 DE 102019120471; 10.09.2019 DE 102019124163
(43) Veröffentlichungstag der Anmeldung: 17.03.2021
(73) Patentinhaber: Eberspächer Controls Esslingen GmbH & Co. KG, 73730 Esslingen (DE)
(72) Erfinder: Stogiannos, Panagiotis, 70619 Stuttgart (DE); Kriessl, Michael, 73037 Göppingen (DE); Fritz, Patrick, 73666 Baltmannsweiler (DE)
(74) Vertreter: Ruttensperger Lachnit Trossin Gomoll

(56) Entgegenhaltungen:
- WO-A1-2016/045836
- WO-A1-2017/072465
- DE-A1-102015 222 545
- US-A1- 2019 191 550

## Beschreibung

Die vorliegende Erfindung betrifft ein Bordnetzsystem in einem Fahrzeug, in welchem ein bzw. mehrere Verbraucher redundant mit elektrischer Energie versorgt werden. Bei Fahrzeugen, bei welchen Fahrfunktionen durch im Fahrzeug vorgesehene Steuersysteme übernommen werden, also beispielsweise für das autonome Fahren aufgebaute Fahrzeuge, ist es erforderlich, insbesondere sicherheitsrelevante Verbraucher, wie zum Beispiel ein Lenksystem, ein Abstandshaltesystem oder ein Spurhaltesystem, mit hoher Betriebssicherheit betreiben zu können. Hierfür werden beispielsweise redundant arbeitende Batterien eingesetzt, so dass derartige Verbraucher aus zwei bzw. zumindest zwei Batterien gespeist werden können. Die Batterien werden über Trennschalteranordnungen mit den Verbrauchern verbunden bzw. von diesen entkoppelt. Derartige Trennschalteranordnungen werden insbesondere auch dazu genutzt, bei Auftreten von Defekten oder Fehlerzuständen, wie zum Beispiel Überspannungen, durch Abkoppeln der bzw. einiger der Verbraucher eine Beschädigung derselben zu vermeiden.

WO 2016/045836 A1 offenbart ein Bordnetz.

Es ist die Aufgabe der vorliegenden Erfindung, ein Bordnetzsystem zur Versorgung wenigstens eines Verbrauchers mit elektrischer Energie in einem Fahrzeug sowie ein Verfahren zum Betreiben eines Bordnetzsystems zur Versorgung wenigstens eines Verbrauchers mit elektrischer Energie in einem Fahrzeug vorzusehen, mit welchen zuverlässig und schnell auf das Auftreten von Überspannungen im Bordnetzsystem reagiert werden kann.

Gemäß einem ersten Aspekt wird diese Aufgabe gelöst durch ein Bordnetzsystem zur Versorgung wenigstens eines Verbrauchers mit elektrischer Energie in einem Fahrzeug, umfassend:
- eine erste Batterie,
- eine zweite Batterie,
- einen die erste Batterie und die zweite Batterie zueinander parallel mit einem Verbraucher-Anschlussleitungsbereich verbindende Trennschalteranordnung, wobei die Trennschalteranordnung umfasst:
- eine erste Trennschaltergruppe zwischen der ersten Batterie und dem Verbraucher-Anschlussleitungsbereich, wobei die erste Trennschaltergruppe einen ersten Trennschalter und in Serie dazu einen zweiten Trennschalter umfasst, wobei jeder Trennschalter von erstem Trennschalter und zweitem Trennschalter einen Eingangsanschluss und einen Ausgangsanschluss aufweist und in einem Geschlossen-Zustand eine Leitungsverbindung zwischen dem Eingangsanschluss und dem Ausgangsanschluss aufweist und in einem offenen-Zustand als Diode in Richtung vom Ausgangsanschluss zum Eingangsanschluss sperrend wirkt, wobei der Ausgangsanschluss des ersten Trennschalters mit dem Ausgangsanschluss des zweiten Trennschalters verbunden ist und wobei der Eingangsanschluss des ersten Trennschalters mit der ersten Batterie verbunden ist und der Eingangsanschluss des zweiten Trennschalters mit dem Verbraucher-Anschlussleitungsbereich verbunden ist,
- eine zweite Trennschaltergruppe zwischen der zweiten Batterie und dem Verbraucher-Anschlussleitungsbereich, wobei die zweite Trennschaltergruppe einen dritten Trennschalter und in Serie dazu einen vierten Trennschalter umfasst, wobei jeder Trennschalter von drittem Trennschalter und viertem Trennschalter einen Eingangsanschluss und einen Ausgangsanschluss aufweist und in einem Geschlossen-Zustand eine Leitungsverbindung zwischen dem Eingangsanschluss und dem Ausgangsanschluss aufweist und in einem offenen-Zustand als Diode in Richtung vom Ausgangsanschluss zum Eingangsanschluss sperrend wirkt, wobei der Ausgangsanschluss des dritten Trennschalters mit dem Ausgangsanschluss des vierten Trennschalters verbunden ist und wobei der Eingangsanschluss des dritten Trennschalters mit der zweiten Batterie verbunden ist und der Eingangsanschluss des vierten

Trennschalters mit dem Verbraucher-Anschlussleitungsbereich verbunden ist, wobei das Bordnetzsystem ferner umfasst:
- eine erste Spannungserfassungsanordnung zur Erfassung des Spannungsniveaus in einem Leitungsbereich zwischen dem Eingangsanschluss des ersten Trennschalters und der ersten Batterie,
- eine zweite Spannungserfassungsanordnung zur Erfassung des Spannungsniveaus in einem Leitungsbereich zwischen dem Eingangsanschluss des dritten Trennschalters und der zweiten Batterie,
- eine dritte Spannungserfassungsanordnung zur Erfassung des Spannungsniveaus im Bereich des Verbraucher-Anschlussleitungsbereichs,
- eine Überspannungserfassungsanordnung zum Erfassen einer Überspannung im Bereich des Verbraucher-Anschlussleitungsbereichs auf der Grundlage des durch die dritte Spannungserfassungsanordnung erfassten Spannungsniveaus und zum Schalten des ersten Trennschalters und des dritten Trennschalters in ihren Offen-Zustand bei erfasster Überspannung im Bereich des Verbraucher-Anschlussleitungsbereichs.

Bei dem erfindungsgemäß aufgebauten Bordnetzsystem wird ein Überspannungszustand dadurch erfasst, dass das Spannungsniveau in dem die verschiedenen, insbesondere auch sicherheitsrelevanten Verbraucher elektrischer Energie anbindenden Leitungsbereich, nämlich dem Verbraucher-Anschlussleitungsbereich, überwacht wird und dann, wenn ein Überspannungszustand erfasst bzw. erkannt wird, durch das Öffnen der an die Batterien angeschlossenen Trennschalter der beiden Trennschaltergruppen reagiert wird. Das Öffnen dieser beiden Trennschalter bei zunächst noch im Geschlossen-Zustand gehaltenem zweiten und vierten Trennschalter entkoppelt zunächst nicht die Verbraucher von den Batterien, da der erste Trennschalter bzw. der dritte Trennschalter aufgrund ihrer Dioden-Funktion nach wie vor einen Stromfluss von den Batterien in Richtung zum Verbraucher-Anschlussleitungsbereich zulassen. Durch diese Dioden-Funktion werden jedoch die beiden Batterien bzw. die zwischen den Batterien und den daran jeweils angeschlossenen Trennschaltern liegenden Leitungsbereiche voneinander entkoppelt, so dass in jedem dieser Leitungsbereiche das dort vorhandene Spannungsniveau unbeeinflusst von dem im jeweils anderen Leitungsbereich vorherrschenden Spannungsniveau auf das Vorliegen eines Defekts, insbesondere eines Überspannungszustands, überprüft werden kann. Derjenige Leitungsbereich, welcher bei dem Vergleich des dort vorherrschenden Spannungsniveaus mit einem Referenz-Spannungsniveau dann eine Überspannung zeigt, kann durch Öffnen des zugeordneten zweiten bzw. vierten Trennschalters dann vom Verbraucher-Anschlussleitungsbereich abgekoppelt werden, so dass dieser bzw. daran angeschlossene Verbraucher nach wie vor über die korrekt bzw. ohne Überspannung arbeitende Batterie gespeist werden können.

Um den Vorgang des Erkennens einer Überspannung im Verbraucher-Anschlussleitungsbereich möglichst schnell durchführen zu können, wird vorgeschlagen, dass die Überspannungserfassungsanordnung als elektrische Schaltung zum Vergleichen des durch die dritte Spannungserfassungsanordnung erfassten Spannungsniveaus mit einem ersten Referenz-Spannungsniveau und zum Erzeugen eines den ersten Trennschalter und den dritten Trennschalter in ihren Offen-Zustand schaltenden Trennschalter-Schaltsignals bei über dem ersten Referenz-Spannungsniveau liegendem Spannungsniveau im Verbraucher-Anschlussleitungsbereich ausgebildet ist. Das Ausgestalten der Überspannungserfassungsanordnung als elektrische Schaltung, also als rein als Hardware aufgebaute und ohne irgendwelche Steuerprogramme arbeitende Schaltung, welche Spannungsniveaus miteinander vergleicht und in Reaktion auf den Vergleich Schaltsignale erzeugt, führt zu einer sehr schnellen Reaktion, die im Vergleich zum Erzeugen derartiger Schaltsignale in einer mit Steuerprogrammen programmierten Mikroprozessoranordnung um Größenordnungen schneller erfolgt.

Um für den normalen Schaltbetrieb der Trennschalteranordnung die Trennschalter derselben öffnen bzw. schließen zu können, kann eine Trennschalter-Ansteuereinheit vorgesehen sein, wobei die Trennschalter-Ansteuereinheit dazu ausgebildet ist, jeden der Trennschalter zwischen seinem Offen-Zustand und seinem Geschlossen-Zustand umzuschalten, und wobei die Trennschalter-Ansteuereinheit dazu ausgebildet ist, das durch die erste Spannungserfassungsanordnung erfasste Spannungsniveau und das durch die zweite Spannungserfassungsanordnung erfasste Spannungsniveau mit einem zweiten Referenz-Spannungsniveau zu vergleichen.

Eine derartige Trennschalter-Ansteuereinheit kann eine Schaltbefehle für die Trennschalter erzeugende Mikroprozessoranordnung umfassen. Die Schaltbefehle für die Trennschalteranordnung können somit in der Mikroprozessoranordnung auf der Grundlage von in dieser abgespeicherten Steuerprogrammen generiert werden.

Um vermittels der Trennschalter-Ansteuereinheit bei Auftreten einer Überspannung im Verbraucher-Anschlussleitungsbereich die erforderlichen Maßnahmen zum Überprüfen der Spannungsniveaus im Bereich der beiden Batterien einleiten zu können, wird vorgeschlagen, dass die Überspannungserfassungsanordnung dazu ausgebildet ist, bei erfasster Überspannung im Verbraucher-Anschlussleitungsbereich ein Überspannung-Signal zur Trennschalter-Ansteuereinheit auszugeben, wobei die Trennschalter-Ansteuereinheit dazu ausgebildet ist, bei Empfang des Überspannung-Signals das durch die erste Spannungserfassungsanordnung erfasste Spannungsniveau und das durch die zweite Spannungserfassungsanordnung erfasste Spannungsniveau mit dem zweiten Referenz-Spannungsniveau zu vergleichen, und dann, wenn das durch die erste Spannungserfassungsanordnung erfasste Spannungsniveau über dem zweiten Referenz-Spannungsniveau liegt, den zweiten Trennschalter in seinen Offen-Zustand zu schalten, und dann, wenn das durch die zweite Spannungserfassungsanordnung erfasste Spannungsniveau über dem zweiten Referenz-Spannungsniveau liegt, den vierten Trennschalter in seinen Offen-Zustand zu schalten.

Um dabei die Spannungsversorgung über den jeweils korrekt arbeitende Trennschaltergruppe zu realisieren, kann die Trennschalter-Ansteuereinheit dazu ausgebildet sein, bei Schalten des zweiten Trennschalters in seinen Offen-Zustand, den dritten Trennschalter in seinen Geschlossen-Zustand zu schalten, und bei Schalten des vierten Trennschalters in seinen Offen-Zustand, den ersten Trennschalter in seinen Geschlossen-Zustand zu schalten.

Bei dem erfindungsgemäßen Bordnetzsystem kann jeder Trennschalter wenigstens einen MOSFET-Schalter umfassen, wobei bei jedem Trennschalter der Eingangsanschluss durch den Source-Anschluss des wenigstens einen MOSFET-Schalters bereitgestellt ist und der Ausgangsanschluss durch den Drain-Anschluss des wenigstens einen MOSFET-Schalters bereitgestellt ist.

Gemäß einem weiteren Aspekt wird die eingangs angegebene Aufgabe gelöst durch ein Verfahren zum Betreiben eines Bordnetzsystems zur Versorgung wenigstens eines Verbrauchers mit elektrischer Energie in einem Fahrzeug, das Bordnetzsystem umfassend:
- eine erste Batterie,
- eine zweite Batterie,
- einen die erste Batterie und die zweite Batterie zueinander parallel mit einem Verbraucher-Anschlussleitungsbereich verbindende Trennschalteranordnung, wobei die Trennschalteranordnung umfasst:
- eine erste Trennschaltergruppe zwischen der ersten Batterie und dem Verbraucher-Anschlussleitungsbereich, wobei die erste Trennschaltergruppe einen ersten Trennschalter und in Serie dazu einen zweiten Trennschalter umfasst, wobei jeder Trennschalter von erstem Trennschalter und zweitem Trennschalter einen Eingangsanschluss und einen Ausgangsanschluss aufweist und in einem Geschlossen-Zustand eine Leitungsverbindung zwischen dem Eingangsanschluss und dem Ausgangsanschluss aufweist und in einem offenen-Zustand als Diode in Richtung vom Ausgangsanschluss zum Eingangsanschluss sperrend wirkt, wobei der Ausgangsanschluss des ersten Trennschalters mit dem Ausgangsanschluss des zweiten Trennschalters verbunden ist und wobei der Eingangsanschluss des ersten Trennschalters mit der ersten Batterie verbunden ist und der Eingangsanschluss des zweiten Trennschalters mit dem Verbraucher-Anschlussleitungsbereich verbunden ist,
- eine zweite Trennschaltergruppe zwischen der zweiten Batterie und dem Verbraucher-Anschlussleitungsbereich, wobei die zweite Trennschaltergruppe einen dritten Trennschalter und in Serie dazu einen vierten Trennschalter umfasst, wobei jeder Trennschalter von drittem Trennschalter und viertem Trennschalter einen Eingangsanschluss und einen Ausgangsanschluss aufweist und in einem Geschlossen-Zustand eine Leitungsverbindung zwischen dem Eingangsanschluss und dem Ausgangsanschluss aufweist und in einem offenen-Zustand als Diode in Richtung vom Ausgangsanschluss zum Eingangsanschluss sperrend wirkt, wobei der Ausgangsanschluss des dritten Trennschalters mit dem Ausgangsanschluss des vierten Trennschalters verbunden ist und wobei der Eingangsanschluss des dritten Trennschalters mit der zweiten Batterie verbunden ist und der Eingangsanschluss des vierten

Trennschalters mit dem Verbraucher-Anschlussleitungsbereich verbunden ist, wobei das Bordnetzsystem ferner umfasst:
- eine erste Spannungserfassungsanordnung zur Erfassung des Spannungsniveaus in einem Leitungsbereich zwischen dem Eingangsanschluss des ersten Trennschalters und der ersten Batterie,
- eine zweite Spannungserfassungsanordnung zur Erfassung des Spannungsniveaus in einem Leitungsbereich zwischen dem Eingangsanschluss des zweiten Trennschalters und der zweiten Batterie,
- eine dritte Spannungserfassungsanordnung zur Erfassung des Spannungsniveaus im Bereich des Verbraucher-Anschlussleitungsbereichs, insbesondere eines Bordnetzsystems nach einem der vorangehenden Ansprüche, umfassend die Maßnahmen:
   a) Vergleichen des durch die dritte Spannungserfassungsanordnung erfassten Spannungsniveaus mit einem ersten Referenz-Spannungsniveau,
   b) dann, wenn das durch die dritte Spannungserfassungsanordnung erfasste Spannungsniveau über dem ersten Referenz-Spannungsniveau liegt, Schalten des ersten Trennschalters und des dritten Trennschalters in ihren Offen-Zustand.

Um nach dem Erkennen, dass eine Überspannung im Bereich des Verbraucher-Anschlussleitungsbereichs vorliegt, ermitteln zu können, in welchem Bereich, insbesondere im Zusammenhang mit welcher der Batterien ein derartiger Überspannungszustand aufgetreten ist, kann weiter vorgesehen sein, dass nach dem Schalten des ersten Trennschalters und des dritten Trennschalters in ihren Offen-Zustand bei einer Maßnahme c) das durch die erste Spannungserfassungsanordnung erfasste Spannungsniveau und das durch die zweite Spannungserfassungsanordnung erfasste Spannungsniveau mit einem zweiten Referenz-Spannungsniveau verglichen werden und bei einer Maßnahme d) dann, wenn das durch die erste Spannungserfassungsanordnung erfasste Spannungsniveau über dem zweiten Referenz-Spannungsniveau liegt, der zweite Trennschalter in seinen Offen-Zustand geschaltet wird, und dann, wenn das durch die zweite Spannungserfassungsanordnung erfasste Spannungsniveau über dem zweiten Referenz-Spannungsniveau liegt, der vierte Trennschalter in seinen Offen-Zustand geschaltet wird.

Ferner kann bei der Maßnahme d) dann, wenn der zweite Trennschalters in seinen Offen-Zustand geschaltet wird, der dritte Trennschalter in seinen Geschlossen-Zustand geschaltet werden, und dann, wenn der vierte Trennschalterin seinen Offen-Zustand geschaltet wird, der erste Trennschalter in seinen Geschlossen-Zustand geschaltet werden.

Das zweite Referenz-Spannungsniveau kann dabei dem ersten Referenz-Spannungsniveau entsprechen.

Um insbesondere das erste Erkennen eines Überspannungszustands im Verbraucher-Anschlussleitungsbereich ohne wesentliche Zeitverzögerung durchführen zu können und in Reaktion darauf die an die Batterien angeschlossenen Trennschalter öffnen zu können, wird vorgeschlagen, dass die Maßnahmen a) und b) durch eine als elektrische Schaltung ausgebildete

Überspannungserfassungsanordnung durchgeführt werden. Die dann folgenden Maßnahmen, nämlich das Überprüfen der Leitungsbereiche zwischen den Batterien und den an diese angeschlossenen Trennschaltern und die in Reaktion auf diese Überprüfung zu treffenden Entscheidungen, also die Maßnahmen c) und d), können dann durch eine eine Mikroprozessoranordnung umfassende Trennschalter-Ansteuereinheit durchgeführt werden.

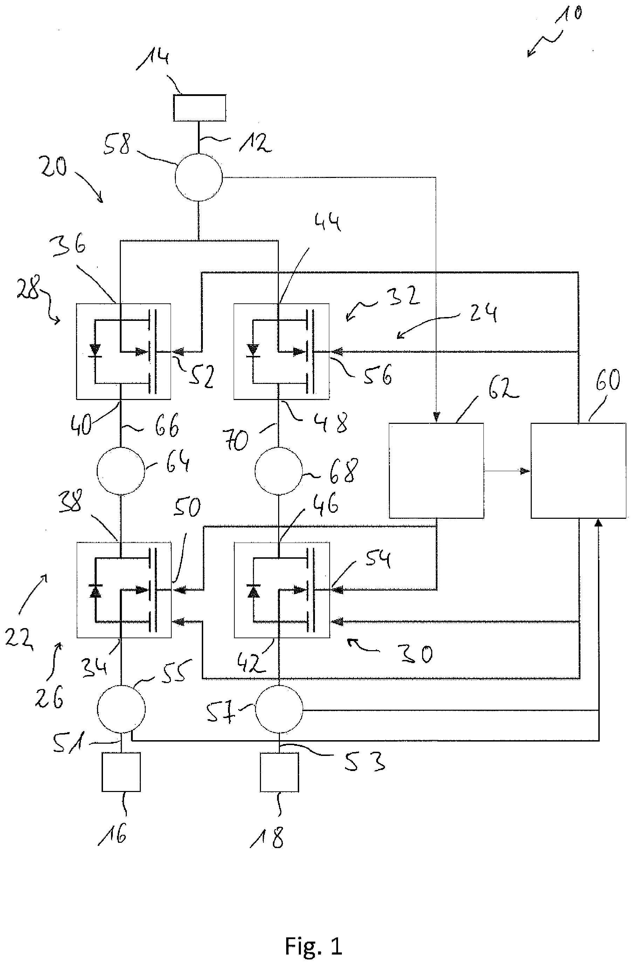

Die vorliegende Erfindung wird nachfolgend mit Bezug auf die beiliegende Fig. 1 detailliert beschrieben, welche in prinzipartiger Darstellung ein Bordnetzsystem für ein Fahrzeug darstellt.

In Fig. 1 ist ein Bordnetzsystem für ein Fahrzeug allgemein mit 10 bezeichnet. In dem Bordnetzsystem 10 werden ein oder mehrere an einen Verbraucher-Anschlussleitungsbereich 12 angeschlossene Verbraucher 14 aus zwei Batterien 16, 18 mit elektrischer Energie gespeist.

Um die Batterien 16, 18 an den bzw. die Verbraucher 14 bzw. den Verbraucher-Anschlussleitungsbereich 12 an bzw. davon abkoppeln zu können, ist eine allgemein mit 20 bezeichnete Trennschalteranordnung vorgesehen. Die Trennschalteranordnung 20 umfasst in Zuordnung zu jeder der beiden den bzw. die Verbraucher 14 beispielsweise parallel speisenden Batterien 16, 18 jeweils eine Trennschaltergruppe 22, 24.

Die der ersten Batterie 16 zugeordnete erste Trennschaltergruppe 22 umfasst einen ersten Trennschalter 26 und dazu seriell einen zweiten Trennschalter 28. Gleichermaßen umfasst die in Zuordnung zur zweiten Batterie 18 vorgesehene zweite Trennschaltergruppe 24 einen dritten Trennschalter 30 und dazu seriell angeordnet einen vierten Trennschalter 32.

Jeder dieser Trennschalter 26, 28, 30, 32 umfasst vorzugsweise wenigstens einen MOSFET-Schalter, insbesondere einen normal sperrenden n-Kanal-MOSFET-Schalter. Es ist darauf hinzuweisen, dass ein oder mehrere dieser Trennschalter 26, 28, 30, 32 auch mehrere zueinander parallel arbeitende MOSFET-Schalter umfassen können.

Der erste Trennschalter 26 weist einen mit der Batterie 16 verbundenen Eingangsanschluss 34 auf. Gleichermaßen weist der zweite Trennschalter 28 einen mit dem Verbraucher-Anschlussleitungsbereich 12 verbundenen Eingangsanschluss 36 auf. Ein Ausgangsanschluss 38 des ersten Trennschalters 26 ist mit einem Ausgangsanschluss 40 des zweiten Trennschalters 28 verbunden.

Ein Eingangsanschluss 42 des dritten Trennschalters 30 ist mit der zweiten Batterie 18 verbunden. Ein Eingangsanschluss 44 des vierten Trennschalters 32 ist mit dem Verbraucher-Anschlussleitungsbereich 12 und damit auch dem Eingangsbereich 36 des zweiten Trennschalters 28 verbunden. Ein Ausgangsanschluss 46 des dritten Trennschalters 30 ist mit einem Ausgangsanschluss 48 des vierten Trennschalters 32 verbunden.

Insbesondere bei Ausgestaltung der Trennschalter 26, 28, 30, 32 als MOSFET-Schalter können die Eingangsanschlüsse 34, 36, 42, 44 derselben jeweils durch den Source-Anschluss bereitgestellt sein, während die Ausgangsanschlüsse 38, 40, 46, 48 jeweils durch die Drain-Anschlüsse bereitgestellt sein können. Ferner weist in diesem Falle jeder dieser Trennschalter 26, 28, 30, 32 einen durch einen jeweiligen Gate-Anschluss bereitgestellten Ansteueranschluss 50, 52, 54, 56 auf, an welchen in nachfolgend beschriebener Art und Weise zum Umschalten der Trennschalter 26, 28, 30, 32 zwischen einem grundsätzlich nicht leitenden Offen-Zustand und einem in beiden Richtungen leitenden geschlossen-Zustand ein Trennschalter-Schaltsignal, also eine jeweilige Gate-Spannung, angelegt werden kann. Wie in Fig. 1 veranschaulicht, wirkt jeder der Trenn-Schalter 26, 28, 30, 32 in seinem Offen-Zustand als Diode, wobei die einander jeweils paarweise zugeordneten Trennschalter 26, 28 der ersten Trennschaltergruppe 22 sowie die einander paarweise zugeordneten Trennschalter 30, 32 der zweiten Trennschaltergruppe 24 durch Verbinden ihrer jeweiligen Ausgangsanschlüsse 38, 40 bzw. 46, 48, also ihre jeweiligen Drain-Anschlüsse miteinander hinsichtlich dieser Diodenfunktion zueinander gegensinnig geschaltet sind. Dies führt dazu, dass beispielsweise bei in der ersten Trennschaltergruppe 22 im Offen-Zustand gehaltenen Trennschaltern 26, 28 der erste Trennschalter 26 aufgrund seiner Diodenfunktion im Offen-Zustand grundsätzlich einen Stromfluss von der ersten Batterie 16 zum Verbraucher-Anschlussleitungsbereich 12 und somit zu dem oder den Verbrauchern 14 zulassen würde, während der hinsichtlich seiner Diodenfunktion gegensinnig geschaltete zweite Trennschalter 28 in diesem Zustand sperrend wirkt und daher den Verbraucher-Anschlussleitungsbereich 12 von der ersten Batterie 16 abkoppelt. Wird nur der zweite Trennschalter 28 in seinen Geschlossen-Zustand geschaltet, ist der Verbraucher-Anschlussleitungsbereich 12 aufgrund der Diodenfunktion des ersten Trennschalters 26 mit der ersten Batterie 16 gekoppelt, so dass der bzw. die Verbraucher 14 aus der ersten Batterie 16 mit elektrischer Energie gespeist werden können. Eine entsprechende Funktionalität liegt auch im Bereich der zweiten Batterie 18 bzw. der dieser zugeordneten zweiten Trennschaltergruppe 24 vor. Dies bedeutet, dass jeder der Trennschalter 26, 28, 30, 32 im Offen-Zustand von seinem jeweiligen Ausgangsanschluss 38, 40, 46, 48 zu dem jeweiligen Eingangsanschluss 34, 36, 42, 44 sperrend wirkt, also einen Stromfluss in dieser Richtung nicht zulässt, in der anderen Richtung aufgrund der Diodenfunktion jedoch leitend ist.

In Zuordnung zur ersten Batterie 16 ist in einem Leitungsbereich 51 zwischen der ersten Batterie 16 und dem ersten Trennschalter 26 eine erste Spannungserfassungsanordnung 55 vorgesehen. Gleichermaßen ist in Zuordnung zur zweiten Batterie 18 in einem Leitungsbereich 53 zwischen der zweiten Batterie 18 und dem dritten Trennschalter 30 eine zweite Spannungserfassungsanordnung 57 vorgesehen. In Zuordnung zum Verbraucher-Anschlussleitungsbereich 12, also zwischen den Eingangsanschlüsse 36, 44 des zweiten Trennschalters 28 bzw. des vierten Trennschalters 32 und dem bzw. den Verbrauchern 14 ist eine dritte Spannungserfassungsanordnung 58 vorgesehen. Jede dieser Spannungserfassungsanordnungen 52, 56, 58 ist dazu ausgebildet, das Spannungsniveau bzw. das Potential im jeweiligen Leitungsbereich 51, 53, 12 beispielsweise bezüglich eines Massepotentials zu erfassen und ein dieses Spannungsniveau repräsentierendes Spannungssignal auszugeben. Dabei geben die erste Spannungserfassungsanordnung 55 und die zweite Spannungserfassungsanordnung 57 das darin jeweils generierte Spannungssignal zu einer Trennschalter-Ansteuereinheit 60 aus. Die dritte Spannungserfassungsanordnung 58 gibt das darin generierte Spannungssignal zu einer Überspannungserfassungsanordnung 62 aus.

Die Trennschalter-Ansteuereinheit 60 umfasst einen oder mehreren Mikroprozessoren und ist mit Steuerprogrammen programmiert, welche unter Berücksichtigung verschiedener Eingangssignale alle Trennschalter 26, 28, 30, 32 anzusteuern. Diese Eingangssignale können beispielsweise auch Stromsignale umfassen, welche den durch eine erste Stromerfassungsanordnung 64 in einem Leitungsbereich 66 zwischen dem ersten Trennschalter 26 und dem zweiten Trennschalter 28 fließenden Strom bzw. den durch eine zweite Stromerfassungsanordnung 68 in einem Leitungsbereich 70 erfassten elektrischen Strom zwischen dem dritten Trennschalter 30 und dem vierten Trennschalter 32 repräsentieren. Durch die Trennschalter-Ansteuereinheit 60 kann also im normalen Fahrbetrieb eines Fahrzeugs dafür gesorgt werden, dass der bzw. die Verbraucher 14 geeignet aus zumindest einer der beiden Batterien 16, 18 gespeist werden und dass ein Stromfluss von einer der beiden Batterien zur anderen unterbunden wird. Ein gegenseitiges Aufladen der Batterien soll vermieden werden. Jede der Batterien kann durch einen oder mehrere in einem Fahrzeug vorgesehene Generatoren gespeist und aufgeladen werden.

Die Überspannungserfassungsanordnung 62 ist als elektrische Schaltung aufgebaut, weist also keinen ein oder mehrere Steuerprogramme abarbeitenden Mikroprozessor auf. In der Überspannungserfassungsanordnung 62 wird das von der dritten Spannungserfassungsanordnung 58 in diese eingespeiste Spannungssignal mit einem ersten Referenz-Spannungsniveau verglichen. Liegt das durch dieses Spannungssignal repräsentierte und durch die dritte Spannungserfassungsanordnung 58 erfasste Spannungsniveau im Verbraucher-Anschlussleitungsbereich 12 bzw. im Bereich der Eingangsanschlüsse 36, 44 des zweiten Trennschalters 28 bzw. des vierten Trennschalters 32 unter dem ersten Referenz-Spannungsniveau, kann davon ausgegangen werden, dass das System korrekt arbeitet und der bzw. die Verbraucher 14 in der grundsätzlich vorgesehenen Art und Weise aus zumindest einer der beiden Batterien 16, 18 gespeist werden können.

Liegt das durch die dritte Spannungserfassungsanordnung 58 erfasste Spannungsniveau über dem ersten Referenz-Spannungsniveau, bedeutet dies, dass im Bereich des Verbraucher-Anschlussleitungsbereichs 12 eine Überspannung vorliegt, die zumindest bei längerem Anliegen an dem bzw. den Verbrauchern 14 zu einer Beschädigung derselben führen kann. Die Überspannungserfassungsanordnung 62 erzeugt in diesem Falle Trennschalter-Schaltsignale für den ersten Trennschalter 26 bzw. den dritten Trennschalter 30, so dass diese in ihren Offen-Zustand geschaltet werden. Sind die Trennschalter, insbesondere der erste Trennschalter 26 und der dritte Trennschalter 30 als normal sperrende MOSFET-Schalter ausgebildet, wird durch das Trennschalter-Schaltsignal das Anlegen der Gate-Spannung an diese Trennschalter 26, 30 unterbunden bzw. beendet, so dass diese in ihren Offen-Zustand geschaltet werden, wenn sie zuvor im Geschlossen-Zustand waren. Gleichzeitig gibt die Spannungserfassungsanordnung 62 ein Überspannung-Signal in die Trennschalter-Ansteuereinheit 60 aus, so dass auch in dieser Trennschalter-Ansteuereinheit 60 Information darüber vorliegt, dass im Verbraucher-Anschlussleitungsbereich 12 eine Überspannung vorliegt.

Durch das Schalten des ersten Trennschalters 26 und des dritten Trennschalters 30 in ihren Offen-Zustand wird bewirkt, dass die beiden Leitungsbereiche 51, 53 spannungstechnisch voneinander entkoppelt werden, da bei zunächst noch im Geschlossen-Zustand gehaltenem zweiten Trennschalter 28 und vierten Trennschalter 32 der erste Trennschalter 26 und der dritte Trennschalter 30 mit ihrer jeweiligen Diodenfunktion zueinander gegensinnig geschaltet sind. In jedem der beiden Leitungsbereiche 51, 53 kann dann unbeeinflusst von dem im jeweils anderen Leitungsbereich vorherrschenden Spannungsniveau durch die jeweils zugeordnete Spannungserfassungsanordnung 55 bzw. 57 das dort vorherrschende Spannungsniveau, also beispielsweise das bezüglich des Massepotentials anliegende Potential, erfasst und in der Trennschalter-Ansteuereinheit 60 ausgewertet werden.

Sind also die beiden Trennschalter 26, 30 in ihren Offen-Zustand geschaltet, was bedeutet, dass aufgrund deren Diode-Funktion nach wie vor der bzw. die Verbraucher 14 durch die Batterien 16, 18 gespeist werden können, vergleicht die Trennschalter-Ansteuereinheit 60 die durch die beiden Spannungserfassungsanordnungen 55, 57 gelieferten Spannungssignale mit einem zweiten Referenz-Spannungsniveau, welches beispielsweise dem in der Überspannungserfassungsanordnung 62 bereitgestellten ersten Referenz-Spannungsniveau entsprechen kann. Wird im Bereich von einem der beiden Leitungsbereiche 51, 53 das Vorliegen einer Überspannung erkannt, was dadurch erfolgt, dass das in einem derartigen Leitungsbereich 51 bzw. 53 vorherrschende Spannungsniveau über dem zweiten Referenz-Spannungsniveau liegt, ist dies ein Indiz dafür, dass im Zusammenhang mit diesem Leitungsbereich bzw. der dann jeweils angeschlossenen Batterie ein zu der Überspannung führender Effekt vorliegt. In Reaktion darauf steuert die Trennschalter-Ansteuereinheit 60 den diesem Leitungsbereich jeweils zugeordneten, zunächst noch im Geschlossen-Zustand gehaltenen zweiten Trennschalter 28 oder vierten Trennschalter 32 derart an, dass dieser in seinem Offen-Zustand umgeschaltet wird, was beispielsweise wiederum dadurch erfolgen kann, dass Anlegen der Gate-Spannung an diesen Trennschalter beendet wird. Es wird somit diejenige Batterie 16 oder 18 bzw. derjenige Leitungsbereich 51 oder 53 vom Verbraucher-Anschlussleitungsbereich 12 entkoppelt, bei welchem das Auftreten einer Überspannung erkannt wurde. Der bzw. die Verbraucher 14 können dann von der jeweils anderen Batterie nach wie vor mit elektrischer Energie gespeist werden. Gleichzeitig kann dann, wenn der zweite Trennschalter 28 in seinen Offen-Zustand geschaltet wird, der dritte Trennschalter 30 in seinen Geschlossen-Zustand geschaltet werden. Wird aufgrund einer erfassten Überspannung der vierte Trennschalter 32 in seinen Offen-Zustand geschaltet, kann als begleitende Maßnahme der erste Trennschalter 26 in seinen Geschlossen-Zustand geschaltet werden.

Da bei dem erfindungsgemäß aufgebauten Bordnetz durch das Erfassen einer Überspannung im Verbraucher-Anschlussleitungsbereich 12 vermittels der als elektrische Schaltung aufgebauten Überspannungserfassungsanordnung aufgrund der sehr kurzen Reaktionszeit sehr schnell ein Zustand hergestellt werden kann, in welchem der Bereich, in welchem die Überspannung tatsächlich aufgetreten ist, vermittels der Trennschalter-Ansteuereinheit 60 lokalisiert werden kann, wird eine sehr kurze Reaktionszeit von weniger als 50 µs gewährleistet, innerhalb welcher nach dem Erfassen des Vorliegens einer Überspannung derjenige Versorgungszweig abgekoppelt werden kann, in welchem dieses Problem aufgetreten ist. Da diese Reaktionszeit sehr kurz ist, besteht auch bei während dieser Zeit fortgesetzter Versorgung des bzw. der Verbraucher 14 mit elektrischer Energie nicht die Gefahr einer Beschädigung derselben.

Mit dem Abkoppeln des fehlerhaft arbeitenden Versorgungszweigs kann gleichzeitig eine Warnung generiert werden, durch welche in einem Fahrzeug erkennbar wird, dass ein derartiger Fehlerzustand vorliegt. Es können dann weitere Sicherheitsmaßnahmen ergriffen werden, um zu gewährleisten, dass dieser Fehlerzustand beendet wird oder beispielsweise ein Fahrzeug sicher zum Stillstand gebracht wird.

Es ist abschließend darauf hinzuweisen, dass die Prinzipien der vorliegenden Erfindung auch Anwendung finden können, wenn zur Versorgung von Verbrauchern mehr als zwei Batterien parallel zueinander genutzt werden. In jedem dieser Versorgungszweige kann dann eine derartige Gruppe von Trennschaltern vorgesehen sein, die in der gleichen Art und Weise wie vorangehend beschrieben betrieben bzw. ausgewertet und geschaltet werden können.

## Patentansprüche

1. Bordnetzsystem zur Versorgung wenigstens eines Verbrauchers mit elektrischer Energie in einem Fahrzeug, umfassend:
- eine erste Batterie (16),
- eine zweite Batterie (18),
- einen die erste Batterie (16) und die zweite Batterie (18) zueinander parallel mit einem Verbraucher-Anschlussleitungsbereich (12) verbindende Trennschalteranordnung (20),
wobei die Trennschalteranordnung (20) umfasst:
- eine erste Trennschaltergruppe (22) zwischen der ersten Batterie (16) und dem Verbraucher-Anschlussleitungsbereich (12), wobei die erste Trennschaltergruppe (22) einen ersten Trennschalter (26) und in Serie dazu einen zweiten Trennschalter (28) umfasst, wobei jeder Trennschalter (26, 28) von erstem Trennschalter (26) und zweitem Trennschalter (28) einen Eingangsanschluss (34, 36) und einen Ausgangsanschluss (38, 40) aufweist und in einem Geschlossen-Zustand eine Leitungsverbindung zwischen dem Eingangsanschluss (34, 36) und dem Ausgangsanschluss (38, 40) aufweist und in einem offenen-Zustand als Diode in Richtung vom Ausgangsanschluss (38, 40) zum Eingangsanschluss (34, 36) sperrend wirkt, wobei der Ausgangsanschluss (38) des ersten Trennschalters (26) mit dem Ausgangsanschluss (40) des zweiten Trennschalters (28) verbunden ist und wobei der Eingangsanschluss (34) des ersten Trennschalters (26) mit der ersten Batterie (16) verbunden ist und der Eingangsanschluss (36) des zweiten Trennschalters (28) mit dem Verbraucher-Anschlussleitungsbereich (12) verbunden ist,
- eine zweite Trennschaltergruppe (24) zwischen der zweiten Batterie (18) und dem Verbraucher-Anschlussleitungsbereich (12), wobei die zweite Trennschaltergruppe (24) einen dritten Trennschalter (30) und in Serie dazu einen vierten Trennschalter (32) umfasst, wobei jeder Trennschalter (30, 32) von drittem Trennschalter (30) und viertem Trennschalter (32) einen Eingangsanschluss (42, 44) und einen Ausgangsanschluss (46, 48) aufweist und in einem Geschlossen-Zustand eine Leitungsverbindung zwischen dem Eingangsanschluss (42, 44) und dem Ausgangsanschluss (46, 48) aufweist und in einem offenen-Zustand als Diode in Richtung vom Ausgangsanschluss (46, 48) zum Eingangsanschluss (42, 44) sperrend wirkt, wobei der Ausgangsanschluss (46) des dritten Trennschalters (30) mit dem Ausgangsanschluss (48) des vierten Trennschalters (32) verbunden ist und wobei der Eingangsanschluss (42) des dritten Trennschalters (30) mit der zweiten Batterie (18) verbunden ist und der Eingangsanschluss (44) des vierten Trennschalters (32) mit dem Verbraucher-Anschlussleitungsbereich (12) verbunden ist,
wobei das Bordnetzsystem (10) ferner umfasst:
- eine erste Spannungserfassungsanordnung (55) zur Erfassung des Spannungsniveaus in einem Leitungsbereich (51) zwischen dem Eingangsanschluss (34) des ersten Trennschalters (26) und der ersten Batterie (16),
- eine zweite Spannungserfassungsanordnung (57) zur Erfassung des Spannungsniveaus in einem Leitungsbereich (53) zwischen dem Eingangsanschluss (42) des dritten Trennschalters (30) und der zweiten Batterie (18),
- eine dritte Spannungserfassungsanordnung (58) zur Erfassung des Spannungsniveaus im Bereich des Verbraucher-Anschlussleitungsbereichs (12),
- eine Überspannungserfassungsanordnung (62) zum Erfassen einer Überspannung im Bereich des Verbraucher-Anschlussleitungsbereichs (12) auf der Grundlage des durch die dritte Spannungserfassungsanordnung (58) erfassten Spannungsniveaus und zum Schalten des ersten Trennschalters (26) und des dritten Trennschalters (30) in ihren Offen-Zustand bei erfasster Überspannung im Bereich des Verbraucher-Anschlussleitungsbereichs (12).

2. Bordnetzsystem nach Anspruch 1, **dadurch gekennzeichnet, dass** die Überspannungserfassungsanordnung (62) als elektrische Schaltung zum Vergleichen des durch die dritte Spannungserfassungsanordnung (58) erfassten Spannungsniveaus mit einem ersten Referenz-Spannungsniveau und zum Erzeugen eines den ersten Trennschalter (26) und den dritten Trennschalter (30) in ihren Offen-Zustand schaltenden Trennschalter-Schaltsignals bei über dem ersten Referenz-Spannungsniveau liegendem Spannungsniveau im Verbraucher-Anschlussleitungsbereich (12) ausgebildet ist.

3. Bordnetzsystem nach Anspruch 1 oder 2, **dadurch gekennzeichnet, dass** eine Trennschalter-Ansteuereinheit (60) vorgesehen ist, wobei die Trennschalter-Ansteuereinheit (60) dazu ausgebildet ist, jeden der Trennschalter (26, 28, 30, 32) zwischen seinem Offen-Zustand und seinem Geschlossen-Zustand umzuschalten, und wobei die Trennschalter-Ansteuereinheit (60) dazu ausgebildet ist, das durch die erste Spannungserfassungsanordnung (55) erfasste Spannungsniveau und das durch die zweite Spannungserfassungsanordnung (57) erfasste Spannungsniveau mit einem zweiten Referenz-Spannungsniveau zu vergleichen.

4. Bordnetzsystem nach Anspruch 3, **dadurch gekennzeichnet, dass** die Trennschalter-Ansteuereinheit (60) eine Schaltbefehle für die Trennschalter (26, 28, 30, 32) erzeugende Mikroprozessoranordnung umfasst.

5. Bordnetzsystem nach Anspruch 2 und Anspruch 3 oder 4, **dadurch gekennzeichnet, dass** die Überspannungserfassungsanordnung (62) dazu ausgebildet ist, bei erfasster Überspannung im Verbraucher-Anschlussleitungsbereich (12) ein Überspannung-Signal zur Trennschalter-Ansteuereinheit (60) auszugeben, wobei die Trennschalter-Ansteuereinheit (60) dazu ausgebildet ist, bei Empfang des Überspannung-Signals das durch die erste Spannungserfassungsanordnung (55) erfasste Spannungsniveau und das durch die zweite Spannungserfassungsanordnung (57) erfasste Spannungsniveau mit dem zweiten Referenz-Spannungsniveau zu vergleichen, und dann, wenn das durch die erste Spannungserfassungsanordnung (55) erfasste Spannungsniveau über dem zweiten Referenz-Spannungsniveau liegt, den zweiten Trennschalter (28) in seinen Offen-Zustand zu schalten, und dann, wenn das durch die zweite Spannungserfassungsanordnung (57) erfasste Spannungsniveau über dem zweiten Referenz-Spannungsniveau liegt, den vierten Trennschalter (32) in seinen Offen-Zustand zu schalten.

6. Bordnetzsystem nach Anspruch 5, **dadurch gekennzeichnet, dass** die Trennschalter-Ansteuereinheit (60) dazu ausgebildet ist, bei Schalten des zweiten Trennschalters (28) in seinen Offen-Zustand, den dritten Trennschalter (30) in seinen Geschlossen-Zustand zu schalten, und bei Schalten des vierten Trennschalters (32) in seinen Offen-Zustand, den ersten Trennschalter (26) in seinen Geschlossen-Zustand zu schalten.

7. Bordnetzsystem nach einem der vorangehenden Ansprüche, **dadurch gekennzeichnet, dass** jeder Trennschalter (26, 28, 30, 32) wenigstens einen MOSFET-Schalter umfasst, wobei bei jedem Trennschalter (26, 28, 30, 32) der Eingangsanschluss (34, 36, 42, 44) durch den Source-Anschluss des wenigstens einen MOSFET-Schalters bereitgestellt ist und der Ausgangsanschluss (38, 40, 46, 48) durch den Drain-Anschluss des wenigstens einen MOSFET-Schalters bereitgestellt ist.

8. Verfahren zum Betreiben eines Bordnetzsystems zur Versorgung wenigstens eines Verbrauchers (14) mit elektrischer Energie in einem Fahrzeug, das Bordnetzsystem (10) umfassend:
- eine erste Batterie (16),
- eine zweite Batterie (18),
- einen die erste Batterie (16) und die zweite Batterie (18) zueinander parallel mit einem Verbraucher-Anschlussleitungsbereich (12) verbindende Trennschalteranordnung (20),
wobei die Trennschalteranordnung (20) umfasst:
- eine erste Trennschaltergruppe (22) zwischen der ersten Batterie (16) und dem Verbraucher-Anschlussleitungsbereich (12), wobei die erste Trennschaltergruppe (22) einen ersten Trennschalter (26) und in Serie dazu einen zweiten Trennschalter (28) umfasst, wobei jeder Trennschalter (26, 28) von erstem Trennschalter (26) und zweitem Trennschalter (28) einen Eingangsanschluss (34, 36) und einen Ausgangsanschluss (38, 40) aufweist und in einem Geschlossen-Zustand eine Leitungsverbindung zwischen dem Eingangsanschluss (34, 36) und dem Ausgangsanschluss (38, 40) aufweist und in einem offenen-Zustand als Diode in Richtung vom Ausgangsanschluss (38, 40) zum Eingangsanschluss (34, 36) sperrend wirkt, wobei der Ausgangsanschluss (38) des ersten Trennschalters (26) mit dem Ausgangsanschluss (40) des zweiten Trennschalters (28) verbunden ist und wobei der Eingangsanschluss (34) des ersten Trennschalters (26) mit der ersten Batterie (16) verbunden ist und der Eingangsanschluss (36) des zweiten Trennschalters (28) mit dem Verbraucher-Anschlussleitungsbereich (12) verbunden ist,
- eine zweite Trennschaltergruppe (24) zwischen der zweiten Batterie (18) und dem Verbraucher-Anschlussleitungsbereich (12), wobei die zweite Trennschaltergruppe (24) einen dritten Trennschalter (30) und in Serie dazu einen vierten Trennschalter (32) umfasst, wobei jeder Trennschalter (30, 32) von drittem Trennschalter (30) und viertem Trennschalter (32) einen Eingangsanschluss (42, 44) und einen Ausgangsanschluss (46, 48) aufweist und in einem Geschlossen-Zustand eine Leitungsverbindung zwischen dem Eingangsanschluss (42, 44) und dem Ausgangsanschluss (46, 48) aufweist und in einem offenen-Zustand als Diode in Richtung vom Ausgangsanschluss (46, 48) zum Eingangsanschluss (42, 44) sperrend wirkt, wobei der Ausgangsanschluss (46) des dritten Trennschalters (30) mit dem Ausgangsanschluss (48) des vierten Trennschalters (32) verbunden ist und wobei der Eingangsanschluss (42) des dritten Trennschalters (30) mit der zweiten Batterie (18) verbunden ist und der Eingangsanschluss (44) des vierten Trennschalters (32) mit dem Verbraucher-Anschlussleitungsbereich (12) verbunden ist,
wobei das Bordnetzsystem (10) ferner umfasst:
- eine erste Spannungserfassungsanordnung (55) zur Erfassung des Spannungsniveaus in einem Leitungsbereich (51) zwischen dem Eingangsanschluss (34) des ersten Trennschalters (26) und der ersten Batterie (16),
- eine zweite Spannungserfassungsanordnung (57) zur Erfassung des Spannungsniveaus in einem Leitungsbereich (53) zwischen dem Eingangsanschluss (42) des dritten Trennschalters (20) und der zweiten Batterie (18),
- eine dritte Spannungserfassungsanordnung (58) zur Erfassung des Spannungsniveaus (im Bereich des Verbraucher-Anschlussleitungsbereichs (12),
insbesondere eines Bordnetzsystems (10) nach einem der vorangehenden Ansprüche, umfassend die Maßnahmen:
a) Vergleichen des durch die dritte Spannungserfassungsanordnung (58) erfassten Spannungsniveaus mit einem ersten Referenz-Spannungsniveau,
b) dann, wenn das durch die dritte Spannungserfassungsanordnung (58) erfasste Spannungsniveau über dem ersten Referenz-Spannungsniveau liegt, Schalten des ersten Trennschalters (26) und des dritten Trennschalters (30) in ihren Offen-Zustand.

9. Verfahren nach Anspruch 8, **dadurch gekennzeichnet, dass** nach dem Schalten des ersten Trennschalters (26) und des dritten Trennschalters (30) in ihren Offen-Zustand bei einer Maßnahme c) das durch die erste Spannungserfassungsanordnung (55) erfasste Spannungsniveau und das durch die zweite Spannungserfassungsanordnung (57) erfasste Spannungsniveau mit einem zweiten Referenz-Spannungsniveau verglichen werden und bei einer Maßnahme d) dann, wenn das durch die erste Spannungserfassungsanordnung (55) erfasste Spannungsniveau über dem zweiten Referenz-Spannungsniveau liegt, der zweite Trennschalter (28) in seinen Offen-Zustand geschaltet wird, und dann, wenn das durch die zweite Spannungserfassungsanordnung (57) erfasste Spannungsniveau über dem zweiten Referenz-Spannungsniveau liegt, der vierte Trennschalter (32) in seinen Offen-Zustand geschaltet wird.

10. Verfahren nach Anspruch 9, **dadurch gekennzeichnet, dass** bei der Maßnahme d) dann, wenn der zweite Trennschalters (28) in seinen Offen-Zustand geschaltet wird, der dritte Trennschalter (30) in seinen Geschlossen-Zustand geschaltet wird, und dann, wenn der vierte Trennschalter (32) in seinen Offen-Zustand geschaltet wird, der erste Trennschalter (26) in seinen Geschlossen-Zustand geschaltet wird.

11. Verfahren nach Anspruch 9 oder 10, **dadurch gekennzeichnet, dass** das zweite Referenz-Spannungsniveau dem ersten Referenz-Spannungsniveau entspricht.

12. Verfahren nach Anspruch 8, 9 oder 10, **dadurch gekennzeichnet, dass** die Maßnahmen a) und b) durch eine als elektrische Schaltung ausgebildete Überspannungserfassungsanordnung (62) durchgeführt werden, und dass die Maßnahmen c) und d) durch eine eine Mikroprozessoranordnung umfassende Trennschalter-Ansteuereinheit (60) durchgeführt werden.

## Claims

1. Onboard power supply system for supplying at least one consumer with electrical energy in a vehicle, comprising:
- a first battery (16),
- a second battery (18),
- a circuit breaker device (20) connecting the first battery (16) and the second battery (18) in parallel to one another to a consumer connection line area (12),
wherein the circuit breaker device (20) comprises:
- a first circuit breaker group (22) between the first battery (16) and the consumer connection line area (12), wherein the first circuit breaker group (22) comprises a first circuit breaker (26) and, connected in series to it, a second circuit breaker (28), wherein each circuit breaker (26, 28) of the first circuit breaker (26) and of the second circuit breaker (28) has an input terminal (34, 36) and an output terminal (38, 40) and has a line connection between the input terminal (34, 36) and the output terminal (38, 40) in a closed state and acts as a diode blocking in the direction from the output terminal (38, 40) to the input terminal (34, 36) in an open state, wherein the output terminal (38) of the first circuit breaker (26) is connected to the output terminal (40) of the second circuit breaker (28) and wherein the input terminal (34) of the first circuit breaker (26) is connected to the first battery (16) and the input terminal (36) of the second circuit breaker (28) is connected to the consumer connection line area (12),
- a second circuit breaker group (24) between the second battery (18) and the consumer connection line area (12), wherein the second circuit breaker group (24) comprises a third circuit breaker (30) and, connected in series to it, a fourth circuit breaker (32), wherein each circuit breaker (30, 32) of the third circuit breaker (30) and fourth circuit breaker (32) has an input terminal (42, 44) and an output terminal (46, 48) and has a line connection between the input terminal (42, 44) and the output terminal (46, 48) in a closed state and acts as a diode blocking in the direction from the output terminal (46, 48) to the input terminal (42, 44) in an open state, wherein the output terminal (46) of the third circuit breaker (30) is connected to the output terminal (48) of the fourth circuit breaker (32) and wherein the input terminal (42) of the third circuit breaker (30) is connected to the second battery (18) and the input terminal (44) of the fourth circuit breaker (32) is connected to the consumer connection line area (12),
wherein the onboard power supply system (10) further comprises:
- a first voltage detection device (55) for detecting the voltage level in a line area (51) between the input terminal (34) of the first circuit breaker (26) and the first battery (16),
- a second voltage detection device (57) for detecting the voltage level in a line area (53) between the input terminal (42) of the third circuit breaker (30) and the second battery (18),
- a third voltage detection device (58) for detecting the voltage level in the area of the consumer connection line area (12), and
- an overvoltage detection device (62) for detecting an overvoltage in the area of the consumer connection line area (12) on the basis of the voltage level detected by the third voltage detection device (58) and for switching the first circuit breaker (26) and the third circuit breaker (30) into their open states when overvoltage is detected in the area of the consumer connection line area (12).

2. Onboard power supply system in accordance with claim 1, **characterized in that** the overvoltage detection device (62) is configured as an electrical circuit for comparing the voltage level detected by the third voltage detection device (58) with a first reference voltage level and for generating a circuit breaker switching signal switching the first circuit breaker (26) and the third circuit breaker (30) into their open states in case of a voltage level above the first reference voltage level in the consumer connection line area (12).

3. Onboard power supply system in accordance with claim 1 or 2, **characterized in that** a circuit breaker actuating unit (60) is provided, wherein the circuit breaker actuating unit (60) is configured to switch each of the circuit breakers (26, 28, 30, 32) between its open state and its closed state, and wherein the circuit breaker actuating unit (60) is configured to compare the voltage level detected by the first voltage detection device (55) and by the second voltage detection device (57) with a second reference voltage level.

4. Onboard power supply system in accordance with claim 3, **characterized in that** the circuit breaker actuating unit (60) comprises a microprocessor device generating switching commands for the circuit breakers (26, 28, 30, 32).

5. Onboard power supply system in accordance with claim 2 and claim 3 or 4, **characterized in that** the overvoltage detection device (62) is configured to output an overvoltage signal to the circuit breaker actuating unit (60) when overvoltage is detected in the consumer connection line area (12), wherein the circuit breaker actuating unit (60) is configured to compare the voltage level detected by the first voltage detection device (55) and the voltage level detected by the second voltage detection device with the second reference voltage level upon receipt of the overvoltage signal, and to switch the second circuit breaker (28) into its open state when the voltage level detected by the first voltage detection device (55) is above the second reference voltage level, and to switch the fourth circuit breaker (32) into its open state when the voltage level detected by the second voltage detection device (57) is above the second reference voltage level.

6. Onboard power supply system in accordance with claim 5, **characterized in that** the circuit breaker actuating device (60) is configured to switch the third circuit breaker (30) into its closed state when the second circuit breaker (28) is switched into its open state, and to switch the first circuit breaker (26) into its closed state when the fourth circuit breaker (32) is switched into its open state.

7. Onboard power supply system in accordance with one of the above claims, **characterized in that** each circuit breaker (26, 28, 30, 32) comprises at least one MOSFET switch, wherein the input terminal (34, 36, 42, 44) is provided in each circuit breaker (26, 28, 30, 32) by the source terminal of the at least one MOSFET switch and the output terminal (38, 40, 46, 48) is provided by the drain terminal of the at least one MOSFET switch.

8. Process for operating an onboard power supply system for supplying at least one consumer (14) with electrical energy in a vehicle, said onboard power supply system (10) comprising:
- a first battery (16),
- a second battery (18),
- a circuit breaker device (20) connecting the first battery (16) and the second battery (18) in parallel to one another to a consumer connection line area (12),
wherein the circuit breaker device (20) comprises:
- a first circuit breaker group (22) between the first battery (16) and the consumer connection line area (12), wherein the first circuit breaker group (22) comprises a first circuit breaker (26) and, connected in series to it, a second circuit breaker (28), wherein each circuit breaker (26, 28) of the first circuit breaker (26) and second circuit breaker (28) has an input terminal (34, 36) and an output terminal (38, 40) and has a line connection between the input terminal (34, 36) and the output terminal (38, 40) in a closed state and acts as a diode blocking in the direction from the output terminal (38, 40) to the input terminal (34, 36) in an open state, wherein the output terminal (38) of the first circuit breaker (26) is connected to the output terminal (40) of the second circuit breaker (28), and wherein the input terminal (34) of the first circuit breaker (26) is connected to the first battery (16) and the input terminal (36) of the second circuit breaker (28) is connected to the consumer connection line area (12),
- a second circuit breaker group (24) between the second battery (18) and the consumer connection line area (12), wherein the second circuit breaker group (24) comprises a third circuit breaker (30) and, connected in series to it, a fourth circuit breaker (32), wherein each circuit breaker (30, 32) of the third circuit breaker (30) and the fourth circuit breaker (32) has an input terminal (42, 44) and an output terminal (46, 48) and has a line connection between the input terminal (42, 44) and the output terminal (46, 48) in a closed state and acts as a diode blocking in the direction from the output terminal (46, 48) to the input terminal (42, 44) in an open state, wherein the output terminal (46) of the third circuit breaker (30) is connected to the output terminal (48) of the fourth circuit breaker (32), and wherein the input terminal (42) of the third circuit breaker (30) is connected to the second battery (18) and the input terminal (44) of the fourth circuit breaker (32) is connected to the consumer connection line area (12),
wherein the onboard power supply system (10) further comprises:
- a first voltage detection device (55) for detecting the voltage level in a line area (51) between the input terminal (34) of the first circuit breaker (26) and the first battery (16),
- a second voltage detection device (57) for detecting the voltage level in a line area (53) between the input terminal (42) of the third circuit breaker (20) and the second battery (18), and
- a third voltage detection device (58) for detecting the voltage level in the area of the consumer connection line area (12),
in particular of an onboard power supply system (10) in accordance with one of the above claims, comprising the steps:
a) Comparison of the voltage level detected by the third voltage detection device (58) with a first reference voltage level, and
b) then, if the voltage level detected by the third voltage detection device (58) is above the first reference voltage level, switching of the first circuit breaker (26) and of the third circuit breaker (30) into their open states.

9. Process in accordance with claim 8, **characterized in that** after switching the first circuit breaker (26) and the third circuit breaker (30) into their open states in a step c), the voltage level detected by the first voltage detection device (55) and the voltage level detected by the second voltage detection device (57) are compared to a second reference voltage level and if the voltage level detected by the first voltage detection device (55) is above the second reference voltage level, the second circuit breaker (28) is switched in a step d) into its open state, and if the voltage level detected by the second voltage detection device (57) is above the second reference voltage level, the fourth circuit breaker (32) is switched into its open state.

10. Process in accordance with claim 9, **characterized in that** if the second circuit breaker (28) is switched into its open state, the third circuit breaker (30) is switched into its closed state in step d), and if the fourth circuit breaker (32) is switched into its open state, the first circuit breaker (26) is switched into its closed state.

11. Process in accordance with claim 9 or 10, **characterized in that** the second reference voltage level corresponds to the first reference voltage level.

12. Process in accordance with claim 8, 9 or 10, **characterized in that** steps a) and b) are carried out by an overvoltage detection device (62) configured as an electrical circuit, and that steps c) and d) are carried out by a circuit breaker actuating unit (60) comprising a microprocessor device.

## Revendications

1. Système d'alimentation électrique embarqué pour alimenter au moins un consommateur en énergie électrique dans un véhicule, comprenant :
- une première batterie (16),
- une deuxième batterie (18),
- un dispositif de disjoncteur (20) reliant la première batterie (16) et la deuxième batterie (18) en parallèle l'une à l'autre à une zone de ligne de connexion de consommateur (12),
dans lequel le dispositif de disjoncteur (20) comprend :
- un premier groupe de disjoncteurs (22) entre la première batterie (16) et la zone de ligne de connexion de consommateur (12), dans lequel le premier groupe de disjoncteurs (22) comprend un premier disjoncteur (26) et, connecté en série à celui-ci, un deuxième disjoncteur (28), dans lequel chaque disjoncteur (26, 28) du premier disjoncteur (26) et du deuxième disjoncteur (28) a une borne d'entrée (34, 36) et une borne de sortie (38, 40) et présente une connexion de ligne entre la borne d'entrée (34, 36) et la borne de sortie (38, 40) dans un état fermé et agit comme une diode de blocage dans la direction allant de la borne de sortie (38, 40) à la borne d'entrée (34, 36) dans un état ouvert, dans lequel la borne de sortie (38) du premier disjoncteur (26) est connectée à la borne de sortie (40) du deuxième disjoncteur (28) et dans lequel la borne d'entrée (34) du premier disjoncteur (26) est connectée à la première batterie (16) et la borne d'entrée (36) du deuxième disjoncteur (28) est connectée à la zone de ligne de connexion de consommateur (12),
- un deuxième groupe de disjoncteurs (24) entre la deuxième batterie (18) et la zone de ligne de connexion de consommateur (12), dans lequel le deuxième groupe de disjoncteurs (24) comprend un troisième disjoncteur (30) et, connecté en série à celui-ci, un quatrième disjoncteur (32), dans lequel chaque disjoncteur (30, 32) du troisième disjoncteur (30) et du quatrième disjoncteur (32) a une borne d'entrée (42, 44) et une borne de sortie (46, 48) et a une connexion de ligne entre la borne d'entrée (42, 44) et la borne de sortie (46, 48) dans un état fermé et agit comme une diode de blocage dans la direction de la borne de sortie (46, 48) vers la borne d'entrée (42, 44) dans un état ouvert, dans lequel la borne de sortie (46) du troisième disjoncteur (30) est connectée à la borne de sortie (48) du quatrième disjoncteur (32) et dans lequel la borne d'entrée (42) du troisième disjoncteur (30) est connectée à la deuxième batterie (18) et la borne d'entrée (44) du quatrième disjoncteur (32) est connectée à la zone de ligne de connexion de consommateur (12),
dans lequel le système d'alimentation électrique embarqué (10) comprend en outre :
- un premier dispositif de détection de tension (55) pour détecter le niveau de tension dans une zone de ligne (51) entre la borne d'entrée (34) du premier disjoncteur (26) et la première batterie (16),
- un deuxième dispositif de détection de tension (57) pour détecter le niveau de tension dans une zone de ligne (53) entre la borne d'entrée (42) du troisième disjoncteur (30) et la deuxième batterie (18),
- un troisième dispositif de détection de tension (58) pour détecter le niveau de tension dans la zone de ligne de connexion de consommateur (12), et
- un dispositif de détection de surtension (62) pour détecter une surtension dans la zone de ligne de connexion de consommateur (12) sur la base du niveau de tension détecté par le troisième dispositif de détection de tension (58) et pour commuter le premier disjoncteur (26) et le troisième disjoncteur (30) dans leurs états ouverts lorsqu'une surtension est détectée dans la zone de ligne de connexion de consommateur (12).

2. Système d'alimentation électrique embarqué selon la revendication 1, **caractérisé en ce que** le dispositif de détection de surtension (62) est configuré comme un circuit électrique pour comparer le niveau de tension détecté par le troisième dispositif de détection de tension (58) avec un premier niveau de tension de référence et pour générer un signal de commutation de disjoncteur commutant le premier disjoncteur (26) et le troisième disjoncteur (30) dans leurs états ouverts dans le cas d'un niveau de tension supérieur au premier niveau de tension de référence dans la zone de la ligne de connexion du consommateur.

3. Système d'alimentation électrique embarqué selon la revendication 1 ou 2, **caractérisé en ce qu'**une unité d'actionnement de disjoncteur (60) est prévue, dans lequel l'unité d'actionnement de disjoncteur (60) est configurée pour commuter chacun des disjoncteurs (26, 28, 30, 32) entre son état ouvert et son état fermé, et dans lequel l'unité d'actionnement de disjoncteur (60) est configurée pour comparer le niveau de tension détecté par le premier dispositif de détection de tension (55) et par le deuxième dispositif de détection de tension (57) avec un deuxième niveau de tension de référence.

4. Système d'alimentation électrique embarqué selon la revendication 3, **caractérisé en ce que** l'unité d'actionnement de disjoncteur (60) comprend un dispositif à microprocesseur générant des commandes de commutation pour les disjoncteurs (26, 28, 30, 32).

5. Système d'alimentation électrique embarqué selon la revendication 2 et la revendication 3 ou 4, **caractérisé en ce que** le dispositif de détection de surtension (62) est configuré pour émettre un signal de surtension vers l'unité d'actionnement de disjoncteur (60) lorsqu'une surtension est détectée dans la zone de ligne de connexion de consommateur (12), dans lequel l'unité d'actionnement de disjoncteur (60) est configurée pour comparer le niveau de tension détecté par le premier dispositif de détection de tension (55) et le niveau de tension détecté par le deuxième dispositif de détection de tension avec le deuxième niveau de tension de référence lors de la réception du signal de surtension, et pour commuter le deuxième disjoncteur (28) dans son état ouvert lorsque le niveau de tension détecté par le premier dispositif de détection de tension (55) est supérieur au deuxième niveau de tension de référence, et pour commuter le quatrième disjoncteur (32) dans son état ouvert lorsque le niveau de tension détecté par le deuxième dispositif de détection de tension (57) est supérieur au deuxième niveau de tension de référence.

6. Système d'alimentation électrique embarqué selon la revendication 5, **caractérisé en ce que** le dispositif d'actionnement de disjoncteur (60) est configuré pour commuter le troisième disjoncteur (30) dans son état fermé lorsque le deuxième disjoncteur (28) est commuté dans son état ouvert, et pour commuter le premier disjoncteur (26) dans son état fermé lorsque le quatrième disjoncteur (32) est commuté dans son état ouvert.

7. Système d'alimentation embarqué selon l'une des revendications précédentes, **caractérisé en ce que** chaque disjoncteur (26, 28, 30, 32) comprend au moins un commutateur MOSFET, dans lequel la borne d'entrée (34, 36, 42, 44) est fournie dans chaque disjoncteur (26, 28, 30, 32) par la borne de source dudit au moins un commutateur MOSFET et la borne de sortie (38, 40, 46, 48) est fournie par la borne de drain dudit au moins un commutateur MOSFET.

8. Procédé de fonctionnement d'un système d'alimentation embarqué pour alimenter au moins un consommateur (14) en énergie électrique dans un véhicule, ledit système d'alimentation embarqué (10) comprenant :
- une première batterie (16),
- une deuxième batterie (18),
- un dispositif de disjoncteur (20) connectant la première batterie (16) et la deuxième batterie (18) en parallèle l'une à l'autre à une zone de ligne de connexion de consommateur (12),
dans lequel le dispositif de disjoncteur (20) comprend :
- un premier groupe de disjoncteurs (22) entre la première batterie (16) et la zone de ligne de connexion de consommateur (12), dans lequel le premier groupe de disjoncteurs (22) comprend un premier disjoncteur (26) et, connecté en série à celui-ci, un deuxième disjoncteur (28), dans lequel chaque disjoncteur (26, 28) du premier disjoncteur (26) et du deuxième disjoncteur (28) a une borne d'entrée (34, 36) et une borne de sortie (38, 40) et présente une connexion de ligne entre la borne d'entrée (34, 36) et la borne de sortie (38, (38, 40) dans un état fermé et agit comme une diode de blocage dans la direction allant de la borne de sortie (38, 40) à la borne d'entrée (34, 36) dans un état ouvert, dans lequel la borne de sortie (38) du premier disjoncteur (26) est connectée à la borne de sortie (40) du deuxième disjoncteur (28), et dans lequel la borne d'entrée (34) du premier disjoncteur (26) est connectée à la première batterie (16) et la borne d'entrée (36) du deuxième disjoncteur (28) est connectée à la zone de ligne de connexion de consommateur (12),
- un deuxième groupe de disjoncteurs (24) entre la deuxième batterie (18) et la zone de ligne de connexion de consommateur (12), dans lequel le deuxième groupe de disjoncteurs (24) comprend un troisième disjoncteur (30) et, connecté en série à celui-ci, un quatrième disjoncteur (32), dans lequel chaque disjoncteur (30, 32) du troisième disjoncteur (30) et du quatrième disjoncteur (32) a une borne d'entrée (42, 44) et une borne de sortie (46, 48) et a une connexion de ligne entre la borne d'entrée (42, 44) et la borne de sortie (46, 48) dans un état fermé et agit comme une diode de blocage dans la direction allant de la borne de sortie (46, 48) à la borne d'entrée (42, 44) dans un état ouvert, dans lequel la borne de sortie (46) du troisième disjoncteur (30) est connectée à la borne de sortie (48) du quatrième disjoncteur (32), et dans lequel la borne d'entrée (42) du troisième disjoncteur (30) est connectée à la deuxième batterie (18) et la borne d'entrée (44) du quatrième disjoncteur (32) est connectée à la zone de ligne de connexion de consommateur (12), dans lequel le système d'alimentation embarqué (10) comprend en outre :
- un premier dispositif de détection de tension (55) pour détecter le niveau de tension dans une zone de ligne (51) entre la borne d'entrée (34) du premier disjoncteur (26) et la première batterie (16),
- un deuxième dispositif de détection de tension (57) pour détecter le niveau de tension dans une zone de ligne (53) entre la borne d'entrée (42) du troisième disjoncteur (20) et la deuxième batterie (18), et
- un troisième dispositif de détection de tension (58) pour détecter le niveau de tension dans la zone de ligne de connexion de consommateur (12), notamment d'un système d'alimentation électrique embarqué (10) selon l'une des revendications précédentes, comprenant les étapes :
a) comparaison du niveau de tension détecté par le troisième dispositif de détection de tension (58) avec un premier niveau de tension de référence, et
b) puis, si le niveau de tension détecté par le troisième dispositif de détection de tension (58) est supérieur au premier niveau de tension de référence, commutation du premier disjoncteur (26) et du troisième disjoncteur (30) dans leur état ouvert.

9. Procédé selon la revendication 8, **caractérisé en ce qu'**après la commutation du premier disjoncteur (26) et du troisième disjoncteur (30) dans leurs états ouverts dans une étape c), le niveau de tension détecté par le premier dispositif de détection de tension (55) et le niveau de tension détecté par le deuxième dispositif de détection de tension (57) sont comparés à un deuxième niveau de tension de référence et si le niveau de tension détecté par le premier dispositif de détection de tension (55) est supérieur au deuxième niveau de tension de référence, le deuxième disjoncteur (28) est commuté dans une étape d) dans son état ouvert, et si le niveau de tension détecté par le deuxième dispositif de détection de tension (57) est supérieur au deuxième niveau de tension de référence, le quatrième disjoncteur (32) est commuté dans son état ouvert.

10. Procédé selon la revendication 9, **caractérisé en ce que** si le deuxième disjoncteur (28) est commuté dans son état ouvert, le troisième disjoncteur (30) est commuté dans son état fermé à l'étape d), et si le quatrième disjoncteur (32) est commuté dans son état ouvert, le premier disjoncteur (26) est commuté dans son état fermé.

11. Procédé selon la revendication 9 ou 10, **caractérisé en ce que** le deuxième niveau de tension de référence correspond au premier niveau de tension de référence.

12. Procédé selon la revendication 8, 9 ou 10, **caractérisé en ce que** les étapes a) et b) sont réalisées par un dispositif de détection de surtension (62) configuré comme un circuit électrique, et **en ce que** les étapes c) et d) sont réalisées par une unité d'actionnement de disjoncteur (60) comprenant un dispositif à microprocesseur.
